# EUROPEAN PATENT APPLICATION

(11) **EP 1 210 868 A1**
(43) Date of publication of application: **05.06.2002**
(21) Application number: 00901950.6
(22) Date of filing: 27.01.2000
(51) Int. Cl.: A01G 31/00

(54) **ULTRA-HIGH-DENSITY PLANT VERTICAL MIST HYDROPONIC SYSTEM AND RAISING PANEL**

(30) Priority: 27.01.1999 JP 1871699
(71) Applicant: Marumoto, Seiichi, Sanda-shi, Hyogo 669-1341 (JP)
(72) Inventor: Marumoto, Seiichi, Sanda-shi, Hyogo 669-1341 (JP)
(74) Representative: Schuhmann, Albrecht
(86) International application number: JP0000435
(87) International publication number: WO0044220

(57) **Abstract**

A ultra-high-density plant vertical mist hydroponic system and raising panels for mist hydroponic cultivation having pot receiving holes provided at angles of 20 to 50 Deg. with respect to panel surfaces, the ultra-high-density plant vertical mist hydroponic system comprising raising panels vertically arranged in multiple stages, and corresponding raising fluorescent lamps and liquid manure spray pipes respectively disposed also vertically in multiples stages, wherein raising panels in a seedling growth stage order are installed so that the uppermost raising panel works as a seedling planting panel, and raising fluorescent lamps can be moved to and stored between the lowermost raising lamp and the second stage raising lamp by shifting the lowermost stage panel and the adjacent next upper stage panel in installation position.

## Description

### TECHNICAL FIELD

The present invention relates to a hydroponic cultivation device for vegetables, especially ultra-high-density plant vertical mist hydroponic system (spray cultivation) that can cultivate greens in the high density in multi-layer cultivation plants, and also relates to panels for vegetable cultivation.

### BACKGROUND OF THE INVENTION

In the prior art, generally a hydroponic cultivation for vegetables uses only artificial light, uses solar light and artificial light together, and so on.

High productivity cannot be expected from the conventional vegetable plants because they use only one layer of cultivation panels set horizontally or about 40 degrees to the ground surface, which results in low yield per 1 square meter of the plant floor.

Japanese patent No.1630442 entitled "A-METHOD OF HYDROPONIC CULTIVATION" for totally automated vegetable cultivation systems need the huge initial investment, they still remain in the test stage.

Accordingly, it is an object of the present invention to provide a hydroponic system having vertical multi-layer panels to greatly improve product yield.

It is another object of the present invention to provide a hydroponic system having newly-devised panel composition not to mechanize excessively, and which cost can be lowered.

### DISCLOSURE OF THE INVENTION

The present invention provides a raising panel for mist hydroponic cultivation having pot-receiving holes provided at angles of 20 to 50 Deg. with respect to panel surfaces.

Furthermore, the present invention provides an ultra-high-density plant vertical mist hydroponic system comprising the raising panels vertically arranged in multi-layered, and corresponding raising fluorescent tubes and fertilizer spray pipes respectively disposed also vertically in multi-layered.

Furthermore, the present invention provides the system, wherein the rising panels in a seeding growth layer order are installed so that the uppermost raising panel works as a seeding planting panel and the lowermost raising panel as a removable harvesting panel, and raising fluorescent tubes can be moved to and stored between the lowermost raising fluorescent tube and the second layer raising fluorescent tube by shifting the lowermost layer panel and adjacent next upper layer panel in installation position.

### BRIEF DESCRIPTION OF THE DRAWINGS

A preferred form of the present invention is illustrated in the accompanying drawings in which:
Fig. 1 is a schematic illustration of an ultra-high-density plant vertical mist hydroponic system.
Fig. 2 illustrates a setting condition of multi-layered vertical raising panels.
Fig. 3 is a side view of a structure of the raising panels.
Fig. 4 is a side view of the structures for the raising panel groups.
Fig. 5 illustrates the arrangement of the raising fluorescent tubes.
Fig. 6 illustrates the structure of the raising panel guardrail and a setting condition of the raising panels in a seedling growth layer order.

### DETAILED DESCRIPTION OF THE PREFERRED EMBODIMENT

The raising panel for the present invention must be light, and it is suitable to be made by the material, which can stand up to fertilizer. For example, a plastic such as a FRP plastic, a urethane plastic, and styrene resin are used as the material of this raising panel.

And the thickness of the panel is comparatively necessary to bore many pot-receiving holes, which set up an angle in the panel.

Furthermore, the strength of this material is needed so that an oblique pot-receiving hole can support the pot, which, put the seedling of the plant until plants grow. Also it is desirable for the growth of the plant with the pot to keep the angles of 20 to 50 Deg. with respect to vertical panel surfaces at this time.

In case of the angles more than 50 Deg. between the panel and the pot, high intensity cannot be realized.

But, when this angle comes less than 20 Deg., the pots become easy to fall from the panel, and the leaves dangle remarkably from the panel as growing. Therefore, the angles except for the above are not suitable for this invention.

The raising fluorescent tubes installed vertically light up the vegetables from the front (plant growth side) of the panel, and fertilizer is jetted in the mist-shaped on one side to the back (root side) of the panel.

A panel is made back to back, and artificial light is arranged in the raising room in the passage.

However, the lowest fluorescent tube is changed in position to the adjacent next upper fluorescent tube, so that the lowest tube can be slid upward. Then the working space is to be held in the corridor.

Furthermore, in the well (an enclosed space in a building running straight up and down) inside, raising panels are composed vertically in the multi-layered, each panel slides from the top to the bottom.

And, pedestrian overpasses for the control are set up in the position of the second and third floor height to take care of the vegetables and to maintenance the facilities easily

### First embodiment

The first embodiment of the raising panels for this invention will be described with reference to the drawings.

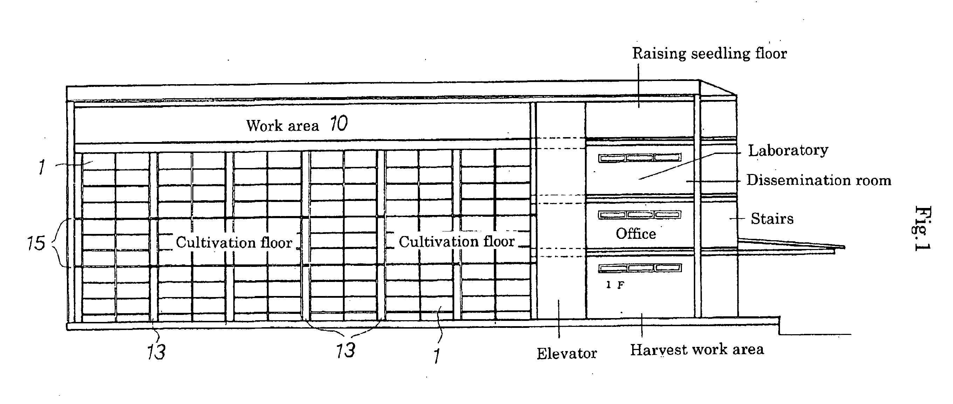

Fig. 1 is a schematic illustration of an ultra-high-density plant vertical mist hydroponic system corresponding to claim 2 and claim 3.

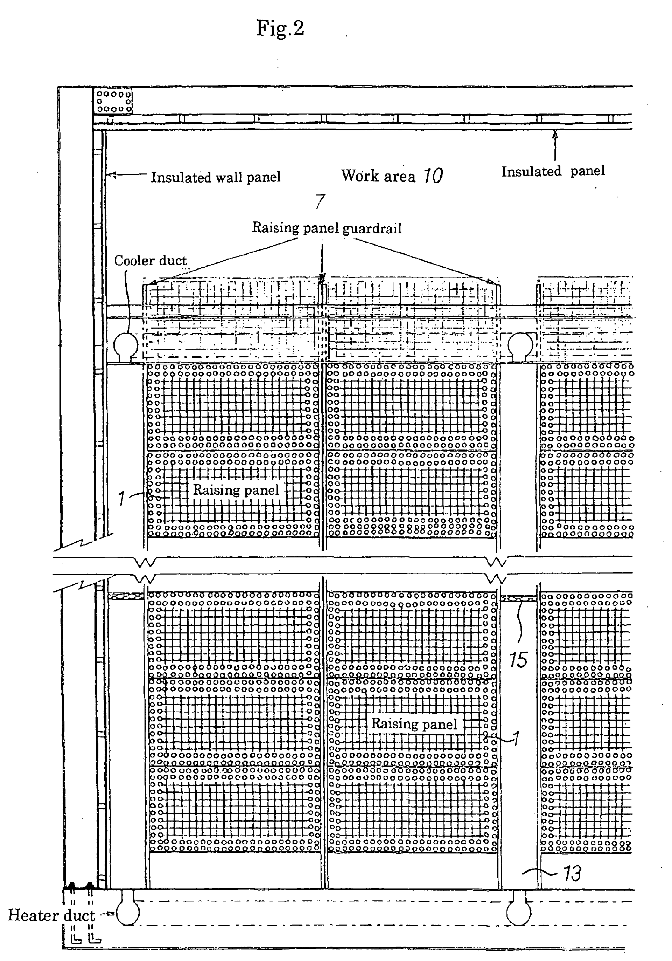

Fig. 2 illustrates a setting condition of multi-layered vertical raising panels.

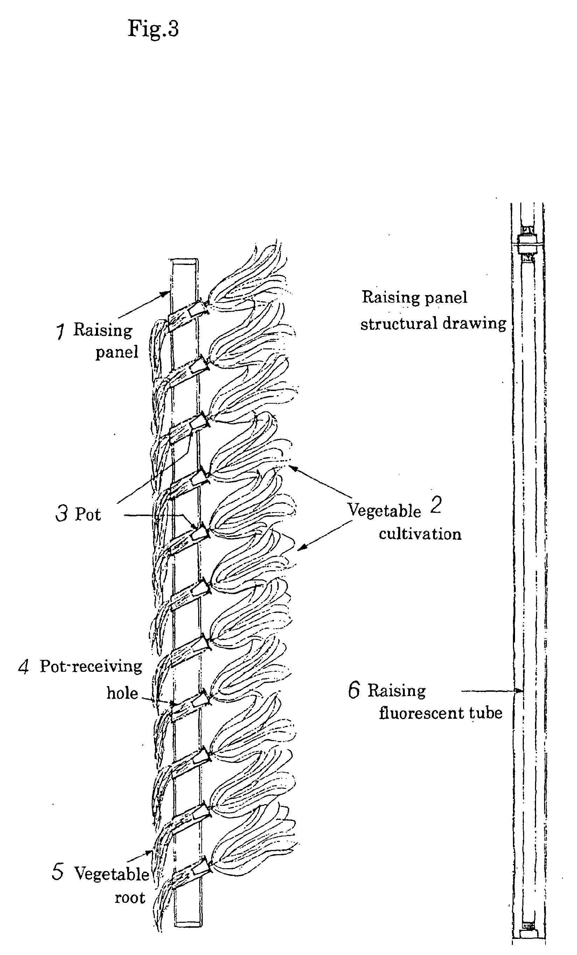

Fig. 3 is a side view of a structure of the raising panels.

Reference numerical, (1) denotes a raising panel, (2) denotes a vegetable cultivation, (3) denotes a pot, (4) denotes a pot-receiving hole, (5) denotes a crop root, (6) denotes a raising fluorescent tube, (10) denotes a work area, (13) denotes a passage for the control, and (15) denotes a pedestrian overpass for the control.

The mist hydroponic cultivation of this invention has a construction that vertical raising panels (1) are pilled up from the bottom to the top about 10 layers as shown in Fig. 1 to raise the harvest efficiency

Generally, by the hydroponic cultivation, which a raising panel is used for, a vegetable cultivation is made to grow with the raising nursery until a seedling is suitable for the hydroponic cultivation. After that, the seedling is inserted into the pot (3) shaped reverse cone with the soil. The top of the pot is opened, and the bottom is being cut.

That seedling inserted into the pot is installed in the pot-receiving hole set up in the raising panel. Then, it will be raised.

As the raising panel is composed vertically for this embodiment, the angle of the pot-receiving hole (4) with respect to the panel should be more than the horizontal so that the pot may not fall.

The above angle is desirable to be at least more than 20 Deg., considering the growing crop weight, and it is less than 50 Deg. considering to its efficiency per panel.

Also as for the number of pot-receiving holes (4) to set up in the raising panel, the space between the holes, the thickness of the panel, it is possible that they are adjusted to the kind of a plant to grow.

The following is the explanation for the raising panels, which are used for the mist hydroponic cultivation of the spinach as a first embodiment.

A panel 120cm by 250cm is used in this embodiment. The space 5cm by 8cm is necessary for every head of spinach as a space of the stock. When the growth length is supposed to be about 25cm, 13 pot-receiving holes (4) in length, 46 pot-receiving holes (4) in width per panel can be installed.

Then, the thickness of the panel is generally to be desirable beyond 1/5 of the height of the vegetable cultivation to be desirable considering their weight balance. Therefore, as for the spinach, it is desirable that the thickness of the panel is at least more than 5cm.By this embodiment, the pot-receiving holes (4) are provided at angle of 27 Deg. with respect to panel surfaces, and the thickness is 5cm.

The cultivation of 598 heads of spinach is possible per panel by using the above raising panel (1) by this system. No pots fell from the panel when the seedlings were planted, and the vegetables were harvested. And there were not any troubles for the growth of the roots and the plants as well. Furthermore, the harvested spinach form was desirable without any distortions, too.

### Second embodiment

The following is the explanation for the present invention as the second embodiment referring to the Fig.1 - Fig.4 and Fig. 6.

This embodiment copes with a claim 2.

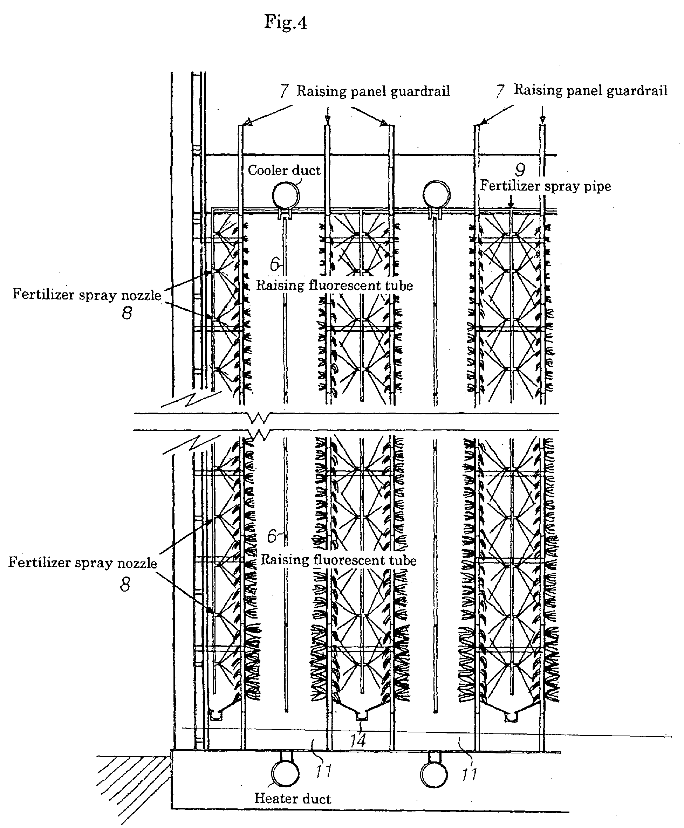

Figure 4 is the explanation view, which shows the positions of raising panels, raising fluorescent tubes, and the fertilizer spray pipes mutually.

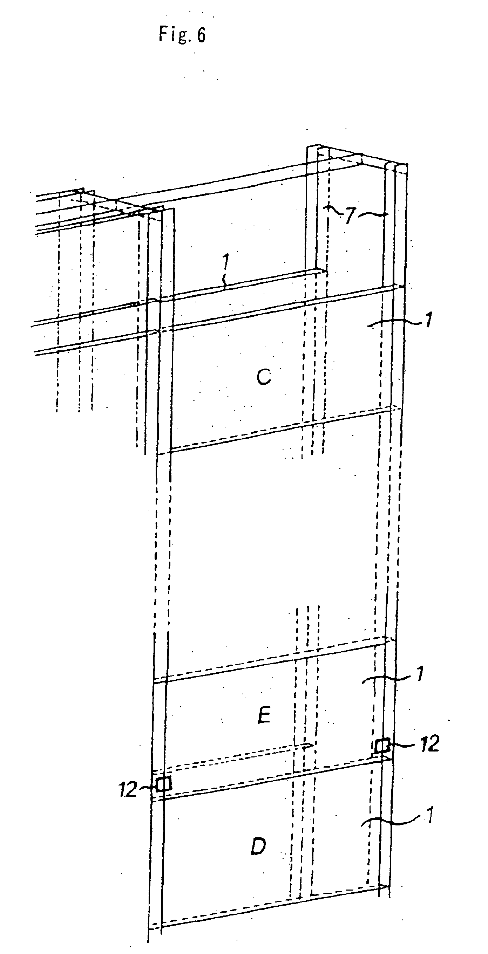

Figure 6 is the explanation view, which shows the structure of raising panel guardrails.

As for this embodiment using only artificial light, the work area (10) comprising the well (an enclosed space in a building running straight up and down) at a height of about 4th floor, is used as a structure of the cultivation factory as shown in Figure 1.

A raising panel guardrail (7) is U-shaped as shown in Fig. 6 so that a raising panel (1) can be inserted. The raising panel guardrails (7) are provided at a height of 1260cm in every panel width. Then ten pieces of the raising panels are piled up vertically along the guardrails (7).

Furthermore, Fig. 4 is the side view, which shows the raising panel groups.

Reference numerical (7) denotes a raising panel guardrail, (8) denotes a fertilizer spray nozzle, and (9) denotes a fertilizer spray pipe.

The raising panels (1) are placed vertically to the back of the vegetable roots (5) as shown in the fig.4. The liquid fertilizer spray pipes (9) are also installed between the panels. The spray nozzles (2) are attached to the spray pipes (3) so that fertilizer will be sprayed regularly to the vegetable roots (5). The spaces between the liquid fertilizer spray pipes (9) are adjusted to the kind of a plant, and the spaces between the fertilizer spray nozzles (8) are as well.

Also, in the middle of the space- the passage for work (11)- into which the vegetables grow, several (the numbers to be needed to the system) fluorescent tubes (6) are installed vertically to provide artificial lighting. Lighting and fertilization spray are automatically controlled by the computer program that creates optimum vegetable cultivation conditions.

The use of an ultra-high-density plant vertical mist hydroponic system, will improve the cultivation density by 7 to 8 times.

Moreover, because a vegetable root stands in a line on both sides, the liquid fertilizer doesn't become useless, and the consumption efficiency of the manure is good in the case of spray.

The efficiency of lighting by raising fluorescent tubes is also good. Because the tubes irradiate to 360 ° from each point. Correspondingly, the tubes irradiate uniformity to the vegetables without using optical adjustment parts such as lampshades.

And, the working in the passage for work (11) is easy to do because spray of the liquid manure doesn't spread over the passage. Furthermore, sprayed liquid manure is being used again, after collecting into the liquid manure collection gutter (14) and it was filtered out to be controlled the liquid manure concentration.

90% of the vegetables grew well by this system when 253 seedlings of the green marigold were grown in every 1 panel for 24 days. And the cost of the raising fluorescent tubes of every 1 panel, and the cost of the liquid manure were 1/2 in comparison with the usual plane-type cultivation system.

In other words, as for the vertical composition by the super-high density plant vertical mist hydroponic system, harvest efficiency is very excellent as to the point of the irradiation and the manure.

### Third embodiment

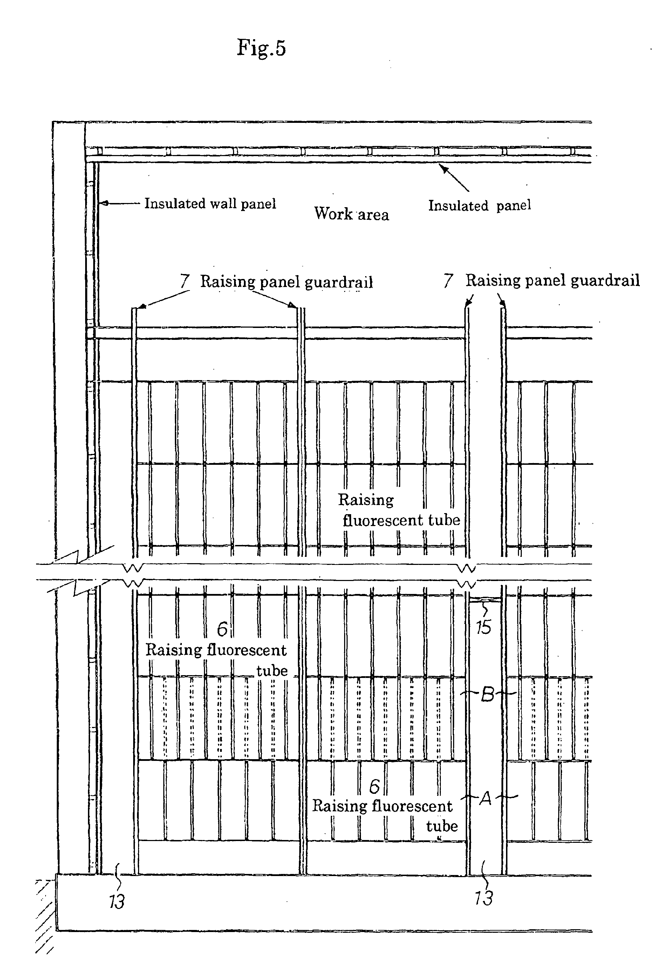

It is based on Figure 5 - Figure 6 about the embodiment, which affects the claim 3 of this invention, and it explains in the following.

The following is the explanation for the present invention as the third embodiment, which affects the claim 3, referring to the Fig.5 - Fig.6.

Figure 5 illustrates the arrangement of the raising fluorescent tubes clearly after removing the raising panels in the work area (10).

Figure 6 is the explanation view, which shows the structure of the cultivation panel guardrail (7) and the process of the harvest working using the raising panels.

In the drawings, (A) denotes the lowermost raising fluorescent tube, (B) denotes the second lowest raising fluorescent tube, (C) denotes the uppermost raising panel, (D) denotes the lowermost raising panel, (E) denotes the second lowest raising panel, (12) denotes a panel stopper.

First, in this embodiment, the raising panel (C) having seedlings (salad greens) pot is inserted from the top of the cultivation panel guardrail (7) as the first stage. After two days, another raising panel having seedlings (salad greens) pot is inserted into the same rail as the second stage. Every panel having seedlings (salad greens) pot is inserted into the same rail at an interval of two days in order. Then, 10-layers of the raising panels are piled up after 20 days. Accordingly, each panel has the different condition of growth of the greens. For five days rest, it's time to harvest the greens set on the lowermost raising panel (D), and the harvest working is as following.
1. First, the lowermost raising fluorescent tube (A) in the passage is moved upward.
   As shown in Fig.5, the lowermost tube (A) is changed in position to the adjacent next upper tube (B), so that the tube (A) can be slid upward in the length of the tube. Therefore, when the lowermost raising fluorescent tube (A) is moved upward, it gets into the space between the second lowest raising fluorescent tubes (B). The working to remove the lowermost panels becomes easy.
2. The second lowest raising panel (E) is fixed by the panel stopper (12) firmly.
3. The lowermost raising panel (D) is removed as it's time to harvest.
4. The pane is moved to the harvest room. And the salad greens with the pot are removed from the panel, and a root is set evenly and put into the container for the carriage with the pot on.
5. A panel stopper (12) is loosened, and the whole nine panels are moved downward in the length of one panel. The raising panel having seedlings (salad greens) is inserted newly from the top of the cultivation panel guardrail as the first stage.

Care and maintenance for the vegetables is easy, and any troubles of the seedling are easy to find, because they are put in growing order from the top to the bottom by repeating the above process.

As a result that 160 head of salad green put every one panel by using this system, the harvest efficiency of seven times was given to it in comparison with the usual mist hydroponic cultivation setting the panel horizontally.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defines by the appended claims unless they depart therefrom.

### INDUSTRIAL APPLICABILITY

As seen from the above, present invention using the mist hydroponic cultivation, comprise pot-receiving holes set obliquely so that the raising panels can be composed vertically.

Furthermore, the efficiency of spraying manure and the irradiation can be highly expected, because the raising fluorescent tubes and liquid manure spray pipes should be also composed vertically with the respect to the panel surfaces. And the use of a multi-layer vertical panel composition, in the limited land, improve the cultivation density by 7 to 8 times

Then, the panels are piled up from the bottom to the top, and they are arranged in growth layer order. Accordingly it makes possible to harvest the seedlings set on the lowermost panel. Also it can improve the efficiency of their control, and harvest working. And, the energy can be saved because the panels are arranged vertically and panel's own gravity is available for the movement of the panel.

## Claims

1. Raising panels for mist hydroponic cultivation **characterized by** having pot-receiving holes provided at angles of 20 to 50 Deg. with respect panel surfaces.

2. An ultra-high-density plant vertical mist hydroponic system **characterized by** comprising the raising panels as in claim 1 vertically arranged in multi-layered, and corresponding raising fluorescent tubes and fertilizer spray pipes respectively disposed also vertically in multi-layered.

3. A system according to claim 2, **characterized in that** the raising panels in a seeding growth layer order are installed so that the uppermost raising panel works as a seedling planting panel and the lowermost raising panel as a removable harvesting panel, and raising fluorescent tubes can be moved to and stored between the lowermost raising fluorescent tubes and the second layer raising fluorescent tubes by shifting the lowermost layer panel and adjacent next upper layer panel in installation position.
